Europäisches Patentamt

European Patent Office

Office européen des brevets

(19)

(11) Veröffentlichungsnummer: **0 006 486**
**B1**

# (12) EUROPÄISCHE PATENTSCHRIFT

(45) Veröffentlichungstag der Patentschrift:
11.01.84

(21) Anmeldenummer: **79101728.8**

(22) Anmeldetag: **01.06.79**

(51) Int. Cl.³: **C 08 L 97/02, B 29 J 5/00**

(54) **Verfahren zur Verminderung der Formaldehydabgabe von Spanplatten.**

(30) Priorität: **01.07.78 DE 2829021**

(43) Veröffentlichungstag der Anmeldung:
**09.01.80 Patentblatt 80/1**

(45) Bekanntmachung des Hinweises auf die Patenterteilung:
**11.01.84 Patentblatt 84/2**

(84) Benannte Vertragsstaaten:
**AT BE CH DE FR GB IT SE**

(56) Entgegenhaltungen:
**EP - A - 0 001 237**
**DE - A - 1 669 142**
**FR - A - 2 332 859**
**FR - A - 2 379 374**

**Die Akte enthält technische Angaben, die nach dem Eingang der Anmeldung eingereicht wurden und die nicht in dieser Patentschrift enthalten sind.**

(73) Patentinhaber: **SWEDSPAN AB, Box 112, S-351 04 Växjö (SE)**

(72) Erfinder: **Roffael, Edmone, Dr.-Ing.,**
**Querumerstrasse 42, D-3300 Braunschweig (DE)**
Erfinder: **Mehlhorn, Lutz, Bienroderweg 54 E,**
**D-3300 Braunschweig (DE)**

(74) Vertreter: **Kraus, Walter, Dr. et al, Patentanwälte Dres. Kraus & Weisert Irmgardstrasse 15,**
**D-8000 München 71 (DE)**

# Verfahren zur Verminderung der Formaldehydabgabe von Spanplatten

Für die Herstellung von Spanplatten werden Holzspäne oder andere lignocellulosehaltige Partikel mit Aminoplasten in Mengen von üblicherweise 8 bis 10 Gew.-%, bezogen auf das trockene Spangut, beleimt, zu Spanmatten gestreut und unter Hitze und Druck gepreßt. Die noch heißen Spanplatten werden nach dem Pressen gestapelt.

Spanplatten, die Aminoplaste als Bindemittel enthalten, geben nach der Herstellung Formaldehyd über relativ lange Zeiträume hinweg ab. Die Formaldehydabgabe dieses Plattentyps hängt von verschiedenen Faktoren ab, wie Molverhältnis von Harnstoff zu Formaldehyd in dem verwendeten Harz, Preßzeit, Bindemittelaufwand, Alter der Platten usw. Der abgegebene Formaldehyd kann Werte erreichen, die das Wohlbefinden von Menschen in Räumen, in denen aminoplastgebundene Spanplatten eingebaut sind, stark beeinträchtigen. Ferner gibt es bislang keine einheitliche Meinung über die gesundheitliche Bedenklichkeit bzw. Unbedenklichkeit des abgegebenen Formaldehyds. Um die nachträgliche Formaldehydabgabe von Spanplatten zu verringern, ist bereits vorgeschlagen worden, Harnstoff-Formaldehydharze mit niedrigem Gehalt an einkondensiertem Formaldehyd einzusetzen. Die Verwendung dieser Harze verringert die nachträgliche Formaldehydabgabe erheblich, kann sich aber auf die physikalisch-technologischen Eigenschaften negativ auswirken (s. O. Wittmann: »Formaldehyd in Harnstoff-Leimharzen für die Spanplattenherstellung« 3. Schenck-Spanplattentagung 1974, und Dr. E. Roffael: »Einfluß des Formaldehydgehaltes in Harnstoffharzen auf ihre Reaktivität und die Formaldehydabgabe damit gebundener Spanplatten« Holz als Roh- und Werkstoff 34 (1976, S. 385 – 390). Weiterhin ist bekannt, daß durch Beimengung von Harnstoff und/oder Ammoniak zum Harnstoff-Formaldehydharz die Formaldehydabgabe verringert werden kann, da diese Stoffe den Formaldehyd chemisch abzubinden vermögen. Die Zugabe von derartigen Stoffen zum Harz ist nur begrenzt möglich, da mit zunehmendem Gehalt an derartigen Stoffen die Abbindegeschwindigkeit des Harzes verlangsamt wird und die physikalisch-technologischen Eigenschaften der Platten bei konstanter Preßzeit verschlechtert werden. Auch ist bereits vorgeschlagen worden, den Holzspänen nach dem Beleimen feinteilige Stoffe beizumengen, die mit dem Formaldehyd chemisch reagieren (DE-OS 16 53 167). Hierbei ist nachteilig, daß der Einsatz dieser Stoffe die Festigkeitseigenschaften der Spanplatten beeinträchtigt, so daß diese Stoffe nicht in dem Umfang eingesetzt werden können, wie dies für die Reduzierung der Formaldehydabgabe notwendig wäre.

Darüber hinaus ist vorgeschlagen worden, Harnstoff-Formaldehydharze mit Gerbstoffen bzw. Gerbstoffderivaten und -abbauprodukten zu vermengen, die den Formaldehyd chemisch abfangen (DE-OS 2 317 884). Praktische Erfahrungen liegen hier jedoch noch nicht vor, wohl u. a. deshalb, weil die Gerbstoffe bzw. deren Derivate sehr teuer im Vergleich zu den Harnstoffharzen sind.

Ferner ist bekannt, daß die nachträgliche Abgabe von Formaldehyd dadurch verringert werden kann, daß man die Holzspanplatten mit einem Anstrich auf Basis wäßriger Kunststoffdispersionsfarbe bestimmter Zusammensetzung allseitig beschichtet. Dieses formaldehydbindende Anstrichmittel für Holzspanplatten enthält Ammoniak, Milchsäurekasein und Hydrazinhydrat in bestimmter Zusammensetzung (DE-PS 1 188 750). Das Beschichten derartig behandelter Platten mit Farbe, Tapeten oder technischen Beschichtungspapieren ist dann jedoch kaum mehr möglich, was den Einsatz dieses Verfahrens auf wenige Ausnahmefälle beschränkt.

Ferner ist vorgeschlagen worden, dem Aminoplast Molekülverbindungen verschiedener Art beizumengen, die die Formaldehydabgabe verringern sollen (C. Kubitzky: »Vermeiden von Geruchsbelästigung bei Spanplatten« Sonderdruck aus »Industrie-Anzeiger« 53 (1972), Ausgabe »Kunststoffe – Verarbeitung und Anwendung« Verlag W. Giradet, Essen). Hierdurch werden jedoch auch die Festigkeitseigenschaften der Platten beeinträchtigt. Darüber hinaus sind die von Kubitzky vorgeschlagenen Molekülverbindungen, verglichen mit den Harnstoffharzen, teuer.

Es ist Aufgabe der Erfindung, die Formaldehydabgabe von aminoplastgebundenen Span- oder Faserplatten zu vermindern, wobei die Festigkeitseigenschaften dieser Platten nicht beeinträchtigt werden dürfen.

Erfindungsgemäß wird diese Aufgabe durch das Verfahren gemäß Anspruch 1 gelöst. »Heiß« bedeutet in diesem Fall möglichst hohe Temperaturen, in einem Bereich, in dem die Platten aus der Heizpresse entnommen werden. Je höher die Plattentemperatur bei der Aufbringung ist, desto wirksamer ist die erfindungsgemäße Maßnahme. Die erfindungsgemäße Behandlung ist z. B. jedoch auch noch bei 310 K wirksam.

Die Festigkeitseigenschaften der so behandelten Platten werden hierdurch nicht beeinträchtigt. Die Formaldehydabgabe geht wesentlich zurück.

Vorteilhafterweise geschieht das Aufbringen der Stoffe unmittelbar nach deren Entnahme aus der Heizpresse, da die Platten dann ohnehin noch heiß sind und nicht erneut erwärmt werden müssen.

Gute Ergebnisse wurden erzielt, wenn das Behandeln der Platten mit Hilfe einer wäßrigen Lösung von Harnstoff oder anderen ammoniakabspaltenden Stoffen vorgenommen wurde. Das Aufbringen der Stoffe ist in diesem Fall besonders einfach, z. B. durch Aufsprühen, möglich.

Sehr gute Ergebnisse wurden mit wäßrigen Harnstofflösungen von 5% bis 20% erreicht, wie im

2

Beispiel beschrieben ist.

Vorteilhafterweise werden die Platten nach dem Aufbringen der Stoffe im heißen Zustand gestapelt. Die Abkühlung wird auf diese Weise stark verzögert, wodurch der Harnstoff oder das Ammoniak genügend Zeit haben, in die Platten einzudringen und mit dem freien Formaldehyd zu reagieren.

Die Menge der ammoniakabspaltenden Stoffe oder des Harnstoffs liegt bei 10 bis 100 g Feststoff/$m^2$ Oberfläche von Spanplatten handelsüblicher Dicke, d. h. zwischen 5 und 50 mm. Diese Menge ist annähernd proportional zur Plattendicke in den Dickenbereichen, die außerhalb dieser Abmessungen liegen. Überdosierungen der Stoffmenge sind in weiten Bereichen unschädlich.

Anhand des folgenden Beispiels wird gezeigt, wie wirksam die erfindungsgemäßen Maßnahmen schon bei ordnungsgemäß hergestellten Spanplatten wirkt. Diese Wirkung tritt verstärkt auf, wenn Fehler in der Fertigung zu höherer Formaldehydabgabe führen.

<center>Beispiel</center>

Acht verschiedene harnstoff-formaldehydharzgebundene Spanplatten mit einer Plattendicke von 19 mm und einer Rohdichte von 0,7 g/$cm^3$ wurden wie folgt hergestellt:

| | | |
|---|---|---|
| Bindemittel | = | 8% (Gew.-%), bezogen auf atro Holz |
| Feuchte vor dem Pressen | = | 10% |
| Preßzeit | = | 5 Min. bei 190° C |

Vier der hergestellten Platten wurden unmittelbar nach dem Pressen mit 10%iger wäßriger Harnstofflösung mit Mengen von 400 g/$m^2$ Oberfläche besprüht und heiß gestapelt. Die anderen vier Platten wurden ohne Besprühung mit Harnstofflösung heiß gestapelt. Nach einer Woche wurden die beiden Plattentypen auf ihre Formaldehydabgabewerte geprüft. Die Bestimmung des Formaldehyds in Spanplatten erfolgt nach einer im Wilhelm-Klanditz-Institut Braunschweig entwickelten Prüfmethode (Dr. E. Roffael: »Messung der Formaldehydabgabe — Praxisnahe Methode zur Ermittlung der Formaldehydabgabe harnstoffharzgebundener Spanplatten für das Bauwesen« Holz-Zentralblatt 101 (1975) 111, 1403 und 1404). Die Ergebnisse sind in der Tabelle zusammengestellt. Aus den Ergebnissen wird deutlich, daß die Besprühung mit Harnstoff eine Verminderung der Formaldehydabgabe um etwa 35% bewirkt.

| Platten-bezeichnung | Beleimung | Nachbehandlung | Formaldehydabgabe nach dem WKI-Verfahren (mg HCHO/ 100 g Spanplatte) | |
|---|---|---|---|---|
| | | | nach 24 Std. | nach 48 Std. |
| RV 1–4 | 8% K 375 | keine | 34,44 | 52,28 |
| RV 5–8 | 8% K 375 | nach dem Pressen jede Platten-seite pro $m^2$ mit 400 g Harnstoff (100 g Harnstoff in 1 l Wasser) besprüht | 22,91 | 33,36 |

## Patentansprüche

1. Verfahren zur Verminderung der Formaldehydabgabe von aminoplastgebundenen Span- oder Faserplatten, dadurch gekennzeichnet, daß auf die Oberfläche der Platten im heißen Zustand unmittelbar oder in kurzem Zeitabstand nach deren Entnahme aus der Heizpresse Harnstoffe oder andere ammoniakabspaltende Stoffe in Form einer wäßrigen Lösung aufgebracht werden.

2. Verfahren nach Anspruch 1, dadurch gekennzeichnet, daß eine 5- bis 20%ige wäßrige Harnstofflösung verwendet wird.

3. Verfahren nach einem der vorhergehenden Ansprüche, dadurch gekennzeichnet, daß die Platten nach dem Aufbringen der Stoffe in heißem Zustand gestapelt werden.

4. Verfahren nach einem der vorhergehenden Ansprüche, dadurch gekennzeichnet, daß der Harnstoff oder die ammoniakabspaltenden Stoffe in einer Menge von 10 bis 100 g Feststoff pro $m^2$

<center>3</center>

## 0 006 486

Plattenoberfläche bei Plattenstärken zwischen 5 und 50 mm aufgebracht werden.

5. Verfahren nach Anspruch 1, dadurch gekennzeichnet, daß die Stoffe aufgesprüht werden.

**Claims**

1. A process for reducing the emission of formaldehyde from aminoplast-bonded chipboard or fiber board, characterized in that ureas or other ammonia-releasing compounds are applied in the form of an aqueous solution to the surface of the boards in their hot state immediately or shortly after their removal from the heating press.

2. A process as claimed in Claim 1, characterized in that a 5 to 20% aqueous urea solution is used.

3. A process as claimed in any of the preceding Claims, characterized in that the boards are stacked in their hot state after the compounds have been applied.

4. A process as claimed in any of the preceding Claims, characterized in that the urea or the ammonia-releasing compound is applied in a quantity of from 10 to 100 g of solids per square meter of board surface for board thicknesses of from 5 to 50 mm.

5. A process as claimed in Claim 1, characterized in that the compounds are sprayed on.

**Revendications**

1. Procédé de réduction de l'excès de formaldéhyde à partir de plaques en fibres ou en planches, liées par des aminoplastes, caractérisé en ce que sur la surface des plaques, à l'état chaud, on apporte, immédiatement ou peu de temps après leur sortie du moule à chaud, de l'urée ou d'autres substances décomposant l'ammoniac sous forme d'une solution aqueuse.

2. Procédé selon la revendication 1, caractérisé en ce qu'on utilise une solution aqueuse d'urée de 5 à 20%.

3. Procédé selon l'une quelconque des revendications précédentes, caractérisé en ce que les plaques sont empilées après la mise en contact des substances à l'état chaud.

4. Procédé selon l'une quelconque des revendications précédentes, caractérisé en ce que l'urée ou les substances décomposant l'ammoniac sont apportées en quantité de 10 à 100 g de matières solides par mètre carré de surface de plaque pour des épaisseurs de plaque entre 5 et 50 mm.

5. Procédé selon la revendication 1, caractérisé en ce que les substances sont vaporisées.

4